# EUROPEAN PATENT SPECIFICATION

(11) **EP 1 945 913 B1**
(45) Date of publication and mention of the grant of the patent: **14.05.2014**
(21) Application number: 06779569.0
(22) Date of filing: 29.09.2006
(51) Int. Cl.: F01D 21/04, F01D 5/14, F01D 5/30, B23K 20/18

(54) **A SUPERPLASTICALLY FORMED BLADE FOR A TURBINE ENGINE AND A CORRESPONDING MANUFACTURING METHOD THEREFORE**
SUPERPLASTISCH GEFORMTES SCHAUFELBLATT FÜR EINE TURBOMASCHINE UND EIN DEMENTSPRECHENDES FERTIGUNGSVERFAHREN DAFÜR
AUBE DE MOTEUR A TURBINE REALISEE PAR FORMAGE SUPERPLASTIQUE ET PROCEDE DE FABRICATION CORRESPONDANT

(30) Priority: 29.10.2005 GB 0522121
(43) Date of publication of application: 23.07.2008
(73) Proprietor: ROLLS-ROYCE PLC, London, SW1E 6AT (GB)
(72) Inventor: READ, Simon, Derbyshire DE56 1JG (GB); BECKFORD, Peter, Rowland, Derby DE72 2BT (GB)
(74) Representative: Barcock, Ruth Anita
(86) International application number: PCT/GB2006/003610
(87) International publication number: WO 2007/048996

(56) References cited:
- EP-A- 0 245 548
- EP-A2- 1 092 485
- GB-A- 2 399 866
- US-A- 5 063 662
- US-A- 5 581 882

## Description

The present invention relates to blades for a turbomachine, and in particular the present invention relates to a fan blade for a turbofan gas turbine engine.

A turbofan gas turbine engine comprises a fan, which comprises a fan rotor and a number of circumferentially spaced radially outwardly extending fan blades secured to the fan rotor. The fan is surrounded by a fan casing, which defines a fan duct. The fan casing is also arranged to contain one or more of the fan blades in the unlikely event that a fan blade becomes detached from the fan rotor.

If a fan blade becomes detached from the fan rotor, for example due to impact with a large foreign body, e.g. a bird, the released fan blade strikes a main fan casing containment region. The fan blade generally progressively breaks up under a buckling action. The fan blade increases in strength from the tip to the root and at some position between the tip and the root the remaining portion of the fan blade, including the root, no longer buckles. The remaining portion of the fan blade has substantial mass and is accelerated to impact a rear fan containment region of the fan casing.

It is necessary to provide additional material to the rear fan containment region of the fan casing to contain the remaining portion of the fan blade. The additional material may be in the form of an increase in thickness, the provision of ribs, honeycomb liners etc, which dissipate the impact energy by plastic deformation of the material. However, these methods of protecting the rear fan containment region add weight to the turbofan gas turbine engine and so ideally should be avoided.

One approach taken to the above problem is defined in U.K. patent publication no. 2399866 (Rolls Royce). Apertures are provided in the root which extend through that root. The apertures create beneficial deflection upon impact such that there is a reduced load placed upon the rearward portions of the fan casing. It is therefore less necessary to provide additional reinforcement in the casing to resist remaining portions of the fan blade as described above. Unfortunately this approach requires use of intrusive machinery within the blade in order to form apertures which extend through the root generally to the blade cavity between the surfaces of that blade. Essentially by allowing deformation there is a reduction in the energy transferred to the casing by encouraging break up of the root fragment about the apertures, or at least flexing as described. US 5 581 882 A discloses a blade according to the preamble of the independent claim 1.

The problem with respect to machining processes such as drilling or otherwise to form the apertures is the associated risk of tool breakage in, and even by this stage, a relatively high value component. Furthermore, it will also be understood that break out of the aperture into the cavity formed in the blade is hard to design and control. Additionally, generally the cavity is no longer sealed by the aperture passing through the root to it and therefore generally a further operation is required in order to prevent fluid ingress to the cavity in use. Finally, it will be understood that if the cavity between the surfaces of the blade extends to a relatively low position in the root, that is to say the root is relatively thin so that introduction of apertures may create particular problems in this highly stressed region of the blade.

In accordance with the present invention there is provided a blade for a turbine engine, and a method of making such a blade, as set out in the claims

Embodiments of the present invention will now be described by way of example and with reference to the accompanying drawings in which;
Fig. 1 is a schematic illustration of the panels utilised in order to form a blade by a superplastic formation and diffusion bonding process;
Fig. 2 is a schematic cross section through a blade root portion in accordance with the present invention;
Fig. 3 illustrates a schematic front view of a blade formed in accordance with the present invention; and
Fig. 4 provides a schematic cross section illustrating a blade root portion impact upon a fan casing containment within a turbine engine.

As indicated above, weight is an important factor with respect to turbine engines particularly when used in aircraft. Occasionally through excessive impacts blades will fracture and therefore the casing must be sufficiently robust in order to contain the blade fragments again so that the potential for aircraft wing or cabin puncture by the fragments is eliminated. By their nature, blades for turbine engines become more robust towards their root, particularly as blades will incorporate cavities themselves in order to reduce weight. Traditionally, blades have been cast or otherwise molded, but it is also possible to create blades by so called super plastic formation (SPF) and typically diffusion bonding about the edges of the component walls of the blade. The processes of superplastic formation are well known and generally will involve diffusion bonding about the edge of the wall panels and then through deformation in a mould, creation of a blade with a cavity between these wall panels results. United States patent number US5581882 describes a method of manufacturing an article by superplastic forming and diffusion bonding. Typically, the edges are finely finished in order to create the leading and trailing edges, etc. Generally between the wall panels a membrane will be provided which may incorporate a cavity or may be a flat sheet in order to provide additional material at the periphery of the blade for leading and trailing edges along with root formation as well as reinforcement.

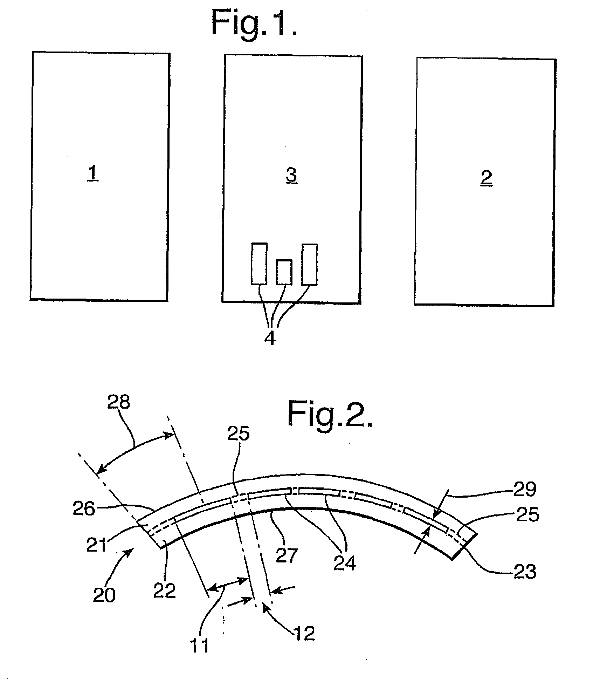

Figs. 1 and 2 show schematic depictions of in Fig. 1 wall panels and a membrane panel to be associated in accordance with the present invention in order to create a blade, whilst Fig. 2 shows a schematic cross section through a root portion of a formed blade. It will be appreciated that a blade will generally have a convex and a concave surface provided by the wall panels 1, 2 once formed.

In accordance with the present invention the membrane panel 3 incorporates slots 4 which extend in the portion of the eventual blade which will define the root for the blade. These slots 4 as described previously with respect to UK patent publication no. 2399866 will act to precipitate hinge and crack deformation by that root portion if it becomes detached and percussively impacts with a turbine engine casing.

In terms of the manufacturing process the walls 1, 2 will be arranged to sandwich the membrane panel 3 between them. Typically, the peripheral edges of the panels 1, 2, 3 will be secured together through a diffusion bonding process and then by outward expansion and super plastic forming, a cavity created in the central portion between the panels 1, 2. Typically, the membrane as indicated above provides a so called line core which extends across the cavity in order to provide reinforcement in the blade. As indicated above, the slots 4 in the present invention will extend towards that formed cavity but may not actually enter into open passage engagement with the cavity. The purpose of the slots is to provide root fragmentation and deformation under impact in order to reduce the necessary robustness of the blade containment casing, and so provided that objective is achieved it is not necessary for the slots to be in open engagement with the cavity formed.

Fig. 2 illustrates a schematic cross section of a root portion of a blade in accordance with the present invention. In comparison with Fig. 1 it will be noted that there are five slots 14, rather than three as depicted in Fig. 1, but as indicated above the number of slots and their configuration is determined by the objective of creating root fragmentation and deformation for reduced impact problems with the containment casing, so that the number of slots can vary and their positioning altered in order to achieve that objective. As illustrated a blade 20 comprises a sandwich as illustrated previously of wall panels 21, 22 with a membrane panel 23 sandwiched between. It will be understood that in the root portion depicted in cross section Fig. 2, these panels 21, 22, 23 are all diffusion bonded together in order to form an essentially solid composite so that to illustrate this effect, broken lines 25 have been used. However, in reality such demarcation may be visually difficult to denote.

As can be seen, the slots 24 extend along the length of the root portion of the blade 20 in a generally radial band between an outer pressure surface 26 created by the wall panel 21 and an inner suction surface 27 created by the wall panel 22.

The slots 24 as illustrated are utilised in order to create fragmentation and deformation under impact load so that it will be understood that the angular position 28 of each slot need not be regular but determined in order to create the desired propagation of fragmentation in the root section as well as deformation under impact.

It will be understood that the height or width 29 of each slot 24 is generally determined by the width of the membrane 23 sandwiched between the wall panels 21, 22 and diffusion bonded together. Again, this height or width 29 will be determined by operational requirements with respect to fragmentation of the root section under impact.

As indicated above, the slots are generally in a radial band between the wall panels 21, 22. In such circumstances, as indicated above, the objective is to achieve root section fragmentation and deformation under impact so it will be understood that the angular extent 11 of the slots is not necessarily the same for all slots 24 within the root portion. Similarly, the angular separation 12 between slots 24 may be regular or irregular as required in order to achieve fragmentation and deformation under impact with a containment casing.

It will be appreciated in comparison with prior arrangements in which apertures were drilled or otherwise cut into a previously solid root portion, the present invention allows less stressful creation of slots in the root portion with less potential for tool failure in creation of the slots. Essentially no machining of the finish plate is required in order to form the slots. Consequently, material scrap losses are also greatly reduced.

As indicated above, the super plastic formation and diffusion bonding process in order to create a blade 20 allows a cavity to be formed which is essentially closed and therefore remains sealed avoiding any ingress of fluids during the lifetime of the blade. Additionally, by ensuring that the cavity remains sealed, it is still possible to use conventional physical tap testing in order to determine through typical quality control processes the acceptability of the blade.

As indicated above, generally with superplastically formed and diffusion bonded blade manufacturing processes, a line core web in the form of a membrane between the forming walls is utilised in order to create reinforcement. Provision of slots in accordance with the present invention does not impinge upon those webs and gives a clean entry to the blade cavity if required. However, alternatively the slots may stop short of the cavity provided the desired disposition to fragmentation and deformation under impact loads by the root portion with a containment casing is achieved.

As the slots can essentially be punched or otherwise formed in the membrane prior to assembly, it will be appreciated that a far greater range of slot size, shape and position in the root portion can be achieved and possible through machining apertures as utilised with prior approaches.

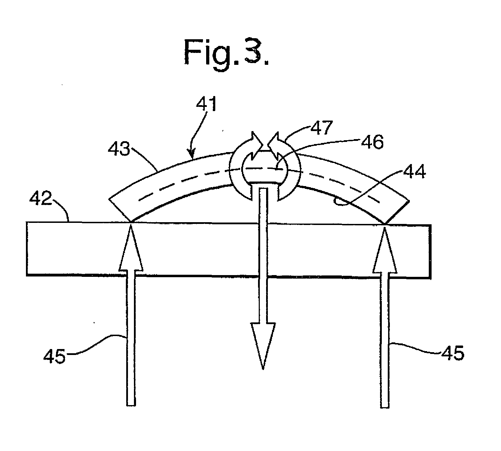

Fig. 3 provides a schematic plan view of a blade 31 in accordance with the present invention with a cavity depicted by broken line 30 and slots by broken lines 34. As can be seen, the cavity 30 is centrally positioned within the blade 31, and as described previously is formed by super plastic formation and diffusion bonding between wall panels and through diffusion bonding about the periphery of the blade 31. Essentially the cavity 30 expands laterally and proportionately in order to define the concave and convex wall surfaces of a blade for operational functionality. Edges 14, 15 of the blade 31 will generally be formed as the leading and trailing edges.

Internally within the blade the slots 34 as can be seen extend towards the cavity 30. In the embodiment depicted in Fig. 3, these slots 34 extend into open passage engagement 35 with the cavity 30, but it will be understood that slots may be provided in a pre-formed membrane which will not extend into the cavity provided these slots facilitate fragmentation in the root portion and deformation under impact.

As depicted in Fig. 3, generally the blade cavity 30 is sealed as a production pre requisite in order to prevent fluid ingress during use.

Generally, a root portion 36 of the blade will be shaped or otherwise formed in order to create means for root engagement with a mounting disc for the blade 31. Thus, the root portion 36 may adopt a dovetail or firtree configuration for such engagement with the rotor disc mounting for the blade 31. In such circumstances, as can be seen, the slots 34a extend below a containment line or release plane for the blade 31 in use. In any event, the slots 34 encourage root fragmentation, break up and deformation under impact with a containment casing.

It will be understood that the use of slots in a membrane with subsequent superplastic formation and diffusion bonding in order to create the blade, enables a far wider range of slot structures and distributions to be used. In such circumstances, rather than being constrained by the capabilities of drill or other cut machining processes, it is possible to achieve a slot and blade design which is tunable to the particular requirements of the blade in use. Such tuning may be through comparison of a situation where if the blade fragments easily then there is localised plastic strain reduction, but energy transfer is similar to present, but if the design is altered to increase the proportion of material that is plastically deformed, then energy transferred to the casing is reduced, but localised plastic strains are relatively unchanged.

Fig. 4 illustrates the impact regime of the root fragment 41 after fracture with a fan casing 42. Thus, the fragment as can be seen generally comprises a convex surface 43 and a concave surface 44. Such an approach leads to leading and trailing edge impact reactions 45 with the casing 42. By provision of slots 46 in the fragment 41 it will be understood that the slots facilitate bending 47 and hinging resulting in flexing and deformation of the fragment 41 dissipating energy. This bending 47 causes flexing of the fragment 41 towards the casing 43 increasing the impact surface between the fragment 41 and the casing 42 increasing the impact contact surface. It is also possible as described previously for the fragment to further fragment through cracking about the slots 46. In any event, the bending 47 leads the central portions of the fragment 41 to move in the direction of arrowhead 48 as indicated in order to increase the impact area upon the casing 42.

Increased nominal stress due to the reduced load bearing area plus stress concentration due to the slots and increased compliance results in greater plastic deformation and cracking dissipating energy. Eventually as indicated through plastic hinge deformation about the slots 46, the root fragment 41 becomes flat or at least becomes flatter increasing the impact contact area with the casing 42.

Modifications and alterations to the present invention will be appreciated by those skilled in the art. Thus, as illustrated in the embodiments above the slots generally will comprise cut outs within the membrane sandwiched between the diffusion bonded wall bands to that membrane. However, alternatively these slots may comprise insert elements of materially different mechanical properties to thereby render the root essentially solid but through those insert materials having a different reaction under stress to create fragmentation and deformation for energy loss and therefore reduced necessity for a robust more weighty containment casing. Furthermore, in addition to the slots being shaped and distributed to facilitate desired fragmentation and deformation under impact load with the casing, it will also be understood that the edges of the slots may be particularly shaped to facilitate plastic deformation for energy dissipation and/or cracking in the root fragment of a blade.

## Claims

1. A blade for a turbine engine, the blade comprising a root portion and a super plastically formed sandwich comprising a concave wall and a convex wall with a cavity membrane therebetween, the walls and cavity membrane are secured together by bonding about their edges in order to define a cavity therebetween when subject to a super plastic deformation process, the blade **characterised in that** the membrane incorporates slots which, once formed by super plastic deformation, are entirely within the root portion of the blade and do not extend into the cavity.

2. A blade as claimed in claim 1 wherein the slots are flat.

3. A blade as claimed in claim 1 or claim 2 wherein the slots are of differing length.

4. A blade as claimed in any of claims 1, 2 or 3 wherein the slots extend below a release plane for the blade.

5. A blade as claimed in any preceding claim wherein the cavity is sealed.

6. A method of making a blade for a turbine engine, the blade comprising a root portion, the method comprising taking two wall panels to be formed respectively as a concave wall and a convex wall in the blade and placing a membrane panel between them so that by superplastic deformation a blade is formed with a cavity between the walls, the method **characterized in that** prior to sandwiching the membrane panel between the walls, slots are formed in the membrane at positions and in configurations so that once formed by the superplastic deformation process, the slots are entirely within the root portion of the blade and do not extend into the cavity.

7. A method as claimed in claim 6 wherein the walls and membrane are secured together about their edges by a diffusion bonding process.

8. A method as claimed in either claim 6 or claim 7 wherein the slots are formed in the blade at a position whereby the slots facilitate deformation of a root portion of the blade.

9. A turbine engine including a blade as claimed in any of claims 1 to 5 or including a blade made by a method as claimed in any of claims 6 to 8.

## Patentansprüche

1. Blatt für einen Turbinenmotor, wobei das Blatt einen Fußabschnitt und eine superplastisch geformte Sandwichkonstruktion umfasst, welche eine konkave Wand und eine konvexe Wand mit einer Hohlraummembran dazwischen umfasst, wobei die Wände und die Hohlraummembran aneinander gesichert sind durch eine Verbindung um ihre Kanten, so dass dazwischen ein Hohlraum gebildet wird, wenn diese einem superplastischen Verformungsprozess ausgesetzt werden, wobei das Blatt **dadurch gekennzeichnet ist, dass** die Membran Schlitze aufweist, die, sobald sie durch superplastische Verformung gebildet sind, sich vollständig in dem Fußabschnitt des Blatts befinden und sich nicht in den Hohlraum erstrecken.

2. Blatt nach Anspruch 1, wobei die Schlitze flach sind.

3. Blatt nach Anspruch 1 oder 2, wobei die Schlitze unterschiedliche Längen aufweisen.

4. Blatt nach einem der Ansprüche 1, 2 oder 3, wobei sich die Schlitze unterhalb einer Freisetzungsebene für das Blatt erstrecken.

5. Blatt nach einem der vorstehenden Ansprüche, wobei der Hohlraum dicht verschlossen ist.

6. Verfahren zur Herstellung eines Blatts für einen Turbinenmotor, wobei das Blatt einen Fußabschnitt umfasst, wobei es das Verfahren umfasst, dass zwei entsprechend zu bildende Wandfelder als eine konkave Wand und eine konvexe Wand in dem Blatt genommen und dazwischen ein Membranfeld platziert wird, so dass durch superplastische Verformung ein Blatt mit einem Hohlraum zwischen den Wänden gebildet wird, wobei das Verfahren **dadurch gekennzeichnet ist, dass** vor der Sandwichanordnung des Membranfelds zwischen den Wänden Schlitze in der Membran an Positionen und in Konfigurationen ausgebildet werden, so dass, sobald die Schlitze durch einen superplastischen Verformungsprozess gebildet sind, sich vollständig in dem Fußabschnitt des Blatts befinden und sich nicht in den Hohlraum erstrecken.

7. Verfahren nach Anspruch 6, wobei die Wände und die Membran um ihre Kanten durch einen Diffusionsverbindungsprozess aneinander angebracht werden.

8. Verfahren nach Anspruch 6 oder 7, wobei die Schlitze in dem Blatt an einer Position ausgebildet werden, so dass die Schlitze die Verformung eines Fußabschnitts des Blatts erleichtern.

9. Turbinenmotor mit einem Blatt nach einem der Ansprüche 1 bis 5 oder einem Blatt, das durch ein Verfahren nach einem der Ansprüche 6 bis 8 hergestellt worden ist.

## Revendications

1. Aube de moteur à turbine, l'aube comprenant une partie racine et un sandwich réalisé par formage superplastique comprenant une paroi concave et une paroi convexe, une membrane de cavité étant située entre elles, les parois et la membrane de cavité étant fixées ensemble par assemblage au niveau de leurs bords afin de définir une cavité entre elles lorsqu'elles sont soumises à un processus de déformation superplastique, l'aube étant **caractérisée en ce que** la membrane comprend des fentes qui, une fois formées par déformation superplastique, sont entièrement à l'intérieur de la partie racine de l'aube et ne s'étendent pas dans la cavité.

2. Aube selon la revendication 1, dans laquelle les fentes sont plates.

3. Aube selon la revendication 1 ou 2, dans laquelle les fentes sont de différentes longueurs.

4. Aube selon l'une quelconque des revendications 1, 2 ou 3, dans laquelle les fentes s'étendent sous un plan de dégagement pour l'aube.

5. Aube selon l'une quelconque des revendications précédentes, dans laquelle la cavité est rendue étanche.

6. Procédé de fabrication d'une aube pour un moteur à turbine, l'aube comprenant une partie racine, le procédé comprenant les étapes consistant à prendre deux panneaux de paroi à former respectivement en tant que paroi concave et paroi convexe dans l'aube et à placer un panneau de membrane entre eux de sorte que par déformation superplastique une aube est pourvue d'une cavité entre les parois, le procédé étant **caractérisé en ce que** préalablement à la mise en sandwich du panneau de membrane entre les parois, des fentes sont formées dans la membrane à des positions et dans des configurations telles que, une fois formées par le procédé de déformation superplastique, les fentes sont entièrement à l'intérieur de la partie racine de l'aube et ne s'étendent pas dans la cavité.

7. Procédé selon la revendication 6, dans lequel les parois et la membrane sont fixées ensemble au niveau de leurs bords par un procédé d'assemblage par diffusion.

8. Procédé selon la revendication 6 ou 7, dans lequel les fentes sont formées dans l'aube à une position moyennant quoi les fentes facilitent la déformation d'une partie racine de l'aube.

9. Moteur à turbine comprenant une aube selon l'une quelconque des revendications 1 à 5 ou comprenant une aube fabriquée par un procédé selon l'une quelconque des revendications 6 à 8.
